# EUROPÄISCHE PATENTSCHRIFT

(11) **EP 2 615 297 B1**
(45) Veröffentlichungstag und Bekanntmachung des Hinweises auf die Patenterteilung: **25.02.2015**
(21) Anmeldenummer: 12197197.2
(22) Anmeldetag: 14.12.2012
(51) Int. Cl.: F02N 11/08, H02J 7/14, B60R 16/033

(54) **Kraftfahrzeugbordnetz und Verfahren zum Betreiben eines Kraftfahrzeugbordnetzes**
Motor vehicle electrical system and method for operating a motor vehicle electrical system
Réseau de bord de véhicule automobile et procédé de fonctionnement d'un réseau de bord de véhicule automobile

(30) Priorität: 14.01.2012 DE 102012000624
(43) Veröffentlichungstag der Anmeldung: 17.07.2013
(73) Patentinhaber: Volkswagen Aktiengesellschaft, 38440 Wolfsburg (DE)
(72) Erfinder: Kühnlenz, Florian, 38448 Wolfsburg (DE); Klinkig, Andreas, 38162 Cremlingen (DE); Fleischer, Rainer, 38444 Wolfsburg (DE); Kube, Dr. Roland, 38179 Schwülper (DE)

(56) Entgegenhaltungen:
- EP-A1- 1 340 908
- EP-A1- 2 562 910
- DE-A1- 10 305 939
- DE-A1-102007 048 342
- DE-A1-102008 054 885
- DE-A1-102009 027 931
- DE-A1-102009 029 524
- DE-A1-102010 001 239

## Beschreibung

Die Erfindung betrifft ein Kraftfahrzeugbordnetz und ein Verfahren zum Betreiben eines Kraftfahrzeugbordnetzes.

Aus verschiedenen Gründen sind Kraftfahrzeugbordnetze mit zwei elektrischen Energiespeichern vorgeschlagen worden, wobei ein häufiger Grund ist, einen Energiespeicher dem Starter zuzuordnen, um so die Startfähigkeit des Kraftfahrzeugs zu gewährleisten.

Aus der DE 10 2010 014 104 A1 ist ein Kraftfahrzeugbordnetz bekannt, welches ein erstes Teilbordnetz aufweist, das eine erste Bordnetzspannung bereitstellt und eine erste Energiespeichereinheit sowie mindestens einen elektrischen Verbraucher aufweist, und ein zweites Teilbordnetz aufweist, das eine zweite Bordnetzspannung bereitstellt und eine zweite Energiespeichereinheit sowie mindestens einen elektrischen Verbraucher aufweist. Diese beiden Teilbordnetze können mittels einer steuerbaren elektrischen Koppeleinrichtung selektiv miteinander gekoppelt werden. Ein vom Fahrzeug angetriebener Generator führt dem Bordnetz über das erste Teilbordnetz elektrische Energie zu und ist so dimensioniert, dass bei maximaler Generatorerregung der Wert der ersten Bordnetzspannung den der zweiten Bordnetzspannung um ein Mehrfaches übersteigt. Dabei ist die erste Energiespeichereinheit aus mindestens zwei Kondensatorgruppen gebildet, die mittels einer steuerbaren Schalteinrichtung selektiv zwischen einer Serien- und einer Parallelschaltung umschaltbar sind. Die Koppeleinrichtung wird dabei durch zwei DC/DC-Wandler gebildet.

Die DE 10 2009 027931 A1 offenbart ein Kraftfahrzeugbordnetz nach dem Oberbegriff des Anspruchs 1 und mit einem Tiefsetzsteller.

Der Erfindung liegt das technische Problem zugrunde, ein Kraftfahrzeugbordnetz mit zwei elektrischen Energiespeichern zu schaffen sowie ein Verfahren zum Betreiben eines solchen Kraftfahrzeugbordnetzes zur Verfügung zu stellen, mittels derer ein flexibles Kraftfahrzeugbordnetz mit geringen Kosten realisierbar ist.

Die Lösung des technischen Problems ergibt sich durch die Gegenstände mit den Merkmalen der Ansprüche 1 und 7. Weitere vorteilhafte Ausgestaltungen der Erfindung ergeben sich aus den Unteransprüchen.

Hierzu umfasst das Kraftfahrzeugbordnetz einen Starter, einen Generator, mindestens einen Bordnetzverbraucher, einen ersten elektrischen Energiespeicher und einen zweiten elektrischen Energiespeicher, wobei der erste elektrische Energiespeicher dem Starter zugeordnet ist, wobei die beiden elektrischen Energiespeicher unterschiedliche Ladespannungen aufweisen, wobei der erste Energiespeicher und der Starter parallel geschaltet sind und der Generator und der mindestens eine Bordnetzverbraucher parallel geschaltet sind, wobei zwischen der Parallelschaltung von dem ersten Energiespeicher und dem Starter und der Parallelschaltung zwischen dem Generator und dem mindestens einen Bordnetzverbraucher ein erstes Schaltelement angeordnet ist, wobei zwischen dem zweiten Energiespeicher und der Parallelschaltung vom Generator und dem mindestens einen Bordnetzverbraucher ein zweites Schaltelement angeordnet ist, wobei parallel zu dem Schaltelement des Energiespeichers mit der niedrigeren Ladespannung ein Tiefsetzsteller angeordnet ist. Dabei können die beiden Energiespeicher mittels unterschiedlicher Batterie-Speichertechnologien realisiert werden, die an die jeweilige Funktion hinsichtlich Leistungsfähigkeit, Kosten und Platz optimiert werden kann. Die beiden elektrischen Energiespeicher können dabei neben unterschiedlichen Ladespannungen auch unterschiedliche Ruhespannungen, Innenwiderstände etc. aufweisen.. Da reine Tiefsetzsteller sich sehr viel kostengünstiger als bidirektionale DC/DC-Wandler realisieren lassen, lässt sich das Kraftfahrzeugbordnetz sehr kostengünstig umsetzen. Dabei ist es grundsätzlich möglich, dass der erste oder der zweite Energiespeicher die höhere Ladespannung aufweist. Aufgrund der Möglichkeit, dass unterschiedliche Batterie- bzw. Speichertechnologien zur Anwendung kommen können, sind auch Ausführungen möglich, wo der eine Energiespeicher zwar eine höhere Ladespannung, aber eine niedrigere Ruhespannung als der andere Energiespeicher aufweist. Vorzugsweise differieren die beiden Energiespeichereinheiten um weniger als 1 V in den Ladespannungen bzw. Ruhespannungen. Dabei sei angemerkt, dass die Versorgung der Bordnetzverbraucher im Ruhezustand je nach Ausgestaltung der Energiespeicher von dem ersten oder dem zweiten Energiespeicher übernommen werden kann.

In einer Ausführungsform ist parallel zum ersten Schaltelement eine Diode angeordnet, über die ein gerichteter Energiefluss von der ersten Energiespeichereinheit zur zweiten Energiespeichereinheit möglich ist, insbesondere wenn die Spannung der zweiten Energiespeichereinheit sinkt, so dass dann die erste Energiespeichereinheit die zweite Energiespeichereinheit bzw. das Bordnetz stützen kann. Die Diode kann dabei als separates Bauteil ausgebildet sein oder aber die parasitäre Diode eines MOS-FETs des Schaltelements sein. Bei einer integrierten Ausführungsform mit der parasitären Diode eines MOS-FETs wird die parasitäre Diode vorzugsweise nur in Sperrrichtung betrieben, wobei in Vorwärtsrichtung der MOS-FET durchgeschaltet wird. Somit muss die parasitäre Diode nicht die großen Ströme in Vorwärtsrichtung tragen. Hierzu wird beispielsweise intern im MOS-FET die Spannung über der parasitären Diode erfasst. Wird dann eine Spannung in Flussrichtung (z.B. 0,1 V) der Flussspannung in der parasitären Diode erfasst, wird der MOS-FET durchgeschaltet und trägt den Strom in Vorwärtsrichtung, da der durchgeschaltete MOS-FET die Diode kurzschließt bzw. überbrückt.

In einer weiteren Ausführungsform weist der erste Energiespeicher eine höhere Ladespannung und eine niedrigere Ruhespannung als der zweite Energiespeicher auf. Dabei kann insbesondere der erste Energiespeicher als Blei-Säure-Akkumulator ausgebildet sein mit einer Ruhespannung von 12,8 V und einer Ladespannung von 14,5 V. Der zweite Energiespeicher kann dann aus Li-lonen-Batteriezellen gebildet sein, die beispielsweise eine Ruhespannung von 13,2 V und eine Ladespannung von 13,6 - 14 V aufweisen. Beispiele für derartige Li-lonen-Batteriezellen sind beispielsweise Li₂Mn₂O₄ oder LiFePO₄ als Kathodenmaterial.

In einer weiteren Ausführungsform ist die Ladekapazität des ersten Energiespeichers größer als die des zweiten Energiespeichers, da letzterer überwiegend zur Glättung der Generatorspannung bzw. zum kurzzeitigen Puffern dient, wohingegen der erste Energiespeicher die hohen Starterströme liefern muss.

In einer weiteren Ausführungsform ist der Innenwiderstand des ersten Energiespeichers derart gewählt, dass dieser ausreichend Strom zur Gewährleistung der Kaltstartfähigkeit des Starters zur Verfügung stellen kann. Dabei kann der Innenwiderstand des ersten Energiespeichers kleiner sein als der Innenwiderstand des zweiten Energiespeichers. Dies ist aber nicht zwingend. Ebenso ist es möglich, dass der Innenwiderstand des zweiten Energiespeichers gleich oder kleiner als der Innenwiderstand des ersten Energiespeichers ist. Ebenso kann die Ladekapazität des ersten Energiespeichers größer oder kleiner sein als die des zweiten Energiespeichers.

In einer weiteren Ausführungsform ist das Kraftfahrzeugbordnetz mit einer Start-Stopp-Automatik einer Brennkraftmaschine ausgebildet.

Während des Betriebes des Kraftfahrzeugs übernimmt der zweite Energiespeicher mit dem Generator die Spannungsversorgung der Bordnetzverbraucher, wozu das zweite Schaltelement geschlossen ist und die Generatorspannung auf die Ladespannung des zweiten Energiespeichers eingestellt ist, wobei das erste Schaltelement geöffnet ist.

Bei einer Ausführungsform, bei der der erste Energiespeicher eine höhere Ladespannung aufweist, wird zum Laden des ersten Energiespeichers das zweite Schaltelement geöffnet, die Generatorspannung an die Ladespannung des ersten Energiespeichers angepasst und das erste Schaltelement geschlossen. Über den Tiefsetzsteller kann dann parallel der zweite Energiespeicher geladen werden, wobei die Spannungsversorgung der Bordnetzverbraucher durch den Generator erfolgt.

In einer weiteren Ausführungsform, bei der im Betriebszustand der zweite Energiespeicher zusammen mit dem Generator die Spannungsversorgung der Bordnetzverbraucher übernimmt, übernimmt im Ruhezustand des Kraftfahrzeugs der erste Energiespeicher die Ruhestromversorgung der Bordnetzverbraucher, wozu das erste Schaltelement geschlossen und das zweite Schaltelement geöffnet wird. Dies ist insbesondere vorteilhaft, wenn der erste Energiespeicher eine höhere Ladekapazität als der zweite Energiespeicher aufweist. Voraussetzung hierfür ist, dass die Bordnetzverbraucher derart ausgelegt sind, dass diese mit der Ruhespannung des ersten Energiespeichers als auch mit der Betriebsspannung des zweiten Energiespeichers betrieben werden können.

In einer weiteren Ausführungsform wird beim Kaltstart des Kraftfahrzeuges das erste Schaltelement geöffnet, so dass keine Rückwirkungen auf das übrige Bordnetz auftreten.

In einer weiteren Ausführungsform bildet im Fehlerfall eines Energiespeichers der andere Energiespeicher eine Rückfallebene.

Die Schaltelemente können als Relais oder als Leistungshalbleiterschalter ausgebildet sein, wobei es auch denkbar ist, ein Schaltelement als Relais und das andere Schaltelement als Leistungshalbleiter auszubilden.

Die Erfindung wird nachfolgend anhand bevorzugter Ausführungsbeispiele näher erläutert. Die Fig. zeigen:
- Fig. 1: eine schematische Darstellung eines Kraftfahrzeugbordnetzes in einer ersten Ausführungsform und
- Fig. 2: eine schematische Darstellung eines Kraftfahrzeugbordnetzes in einer zweiten Ausführungsform.

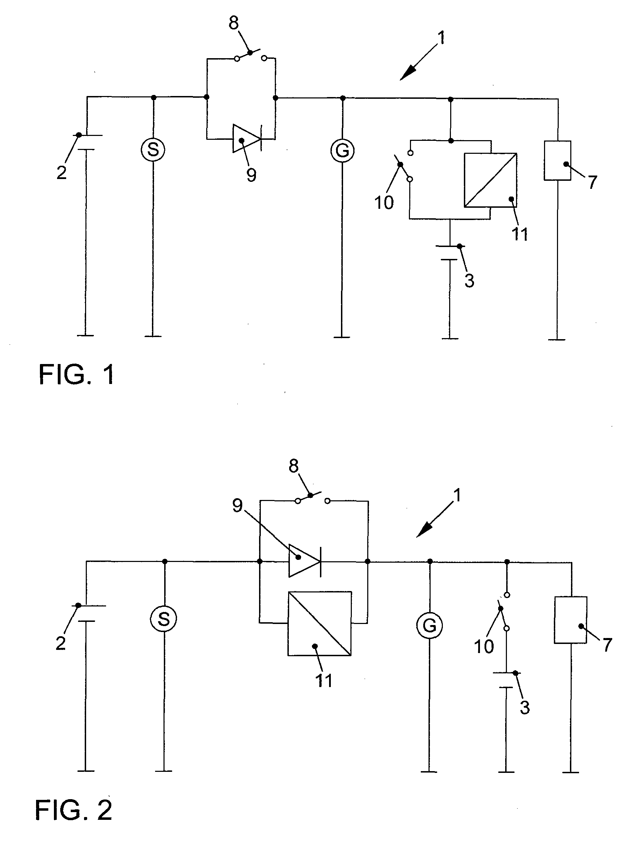

In Fig. 1 ist ein Kraftfahrzeugbordnetz 1 dargestellt, umfassend einen ersten elektrischen Energiespeicher 2, einen Starter S einer nicht dargestellten Brennkraftmaschine, einen zweiten elektrischen Energiespeicher 3, einen Generator G und Bordnetzverbraucher 7. Zwischen dem ersten Energiespeicher 2 und dem Generator G ist ein erstes Schaltelement 8 mit parallel geschalteter Diode 9 angeordnet. Zwischen dem zweiten Energiespeicher 3 und dem Generator G bzw. Bordnetzverbraucher 7 ist ein zweites Schaltelement 10 angeordnet, zu dem parallel ein Tiefsetzsteller 11 angeordnet ist. Dabei ist die Ladespannung U_{L1} des ersten Energiespeichers 2 größer als die Ladespannung U_{L2} des zweiten Energiespeichers 3. Dabei kann die Ruhespannung (Leerlaufspannung) U₀₁ größer oder kleiner als die Ruhespannung U₀₂ des zweiten Energiespeichers sein. Der erste Energiespeicher 2 weist dabei eine höhere Ladekapazität als der zweite Energiespeicher 3 auf. Der erste Energiespeicher 2 und der zweite Energiespeicher 3 beruhen auf unterschiedlichen Speichertechnologien. So ist der erste Energiespeicher 2 beispielsweise ein Blei-Säure-Akkumulator, wohingegen der zweite Energiespeicher 3 in Li-lonen-Technik ausgebildet ist. Die verwendete Speichertechnologie ist dabei auf die jeweilige Funktion der Energiespeicher 2, 3 abgestimmt und optimiert. So muss der erste Energiespeicher 2 beispielsweise die hohen Entladeströme beim Starten des Starters S aufbringen können.

Während des Betriebes des Kraftfahrzeuges ist die Normalkonfiguration des Kraftfahrzeugbordnetzes 1, dass das erste Schaltelement 8 offen ist und das zweite Schaltelement 10 geschlossen ist. Dadurch ist der zweite Energiespeicher 3 parallel zum Generator G und zu den Bordnetzverbrauchern 7 geschaltet. Die Generatorspannung wird auf die Ladespannung U_{L2} des zweiten Energiespeichers 3 eingestellt, wobei die Versorgung der Bordnetzverbraucher 7 durch den Generator G mit dem parallel geschalteten zweiten Energiespeicher 3 erfolgt.

Wird während des Betriebes aufgrund einer Start-Stopp-Automatik die Brennkraftmaschine abgeschaltet, so liefert der Generator G keine Spannung. In diesen Stopp-Phasen übernimmt der zweite Energiespeicher 3 die Spannungsversorgung der Bordnetzverbraucher 7. Sinkt dabei die Spannung am zweiten Energiespeicher 3 zu stark, so wird die Diode 9 leitend und der erste Energiespeicher 2 liefert Strom für die Bordnetzverbraucher 7. Durch das offene Schaltelement 8 und die Diode 9 sind darüber hinaus die Bordnetzverbraucher 7 derart entkoppelt, dass Spannungseinbrüche am ersten Energiespeicher 2 keine Auswirkungen auf die Bordnetzverbraucher 7 haben, wenn der Starter S die Brennkraftmaschine wieder startet.

Muss hingegen während des Betriebes der erste Energiespeicher 2 geladen werden, so wird das erste Schaltelement 8 geschlossen, das zweite Schaltelement 10 geöffnet und die Generatorspannung auf die Ladespannung U_{L1} des ersten Energiespeichers 2 erhöht. Durch das offene Schaltelement 10 wird dabei vermieden, dass der zweite Energiespeicher 3 mit einer zu hohen Ladespannung beaufschlagt wird. Über den Tiefsetzsteller 11 kann jedoch trotzdem der zweite Energiespeicher 3 geladen werden. Der Tiefsetzsteller 11 setzt dazu die Ladespannung U_{L1} in die Ladespannung U_{L2} herunter. Dadurch kann gleichzeitig der erste Energiespeicher 2 und der zweite Energiespeicher 3 geladen werden. Nach erfolgter Ladung des ersten Energiespeichers 2 wird dann das erste Schaltelement 8 wieder geöffnet und das zweite Schaltelement 10 geschlossen, wobei die Generatorspannung wieder auf die Ladespannung U_{L2} des zweiten Energiespeichers 3 angepasst wird. Dabei ist anzumerken, dass die Differenz zwischen der Ruhespannung U₀₁ des ersten Energiespeichers 2 und der Ruhespannung U₀₂ des zweiten Energiespeichers 3 kleiner als die Flussspannung der Diode 9 sein sollte, um einen permanenten Stromfluss zu verhindern. Gegebenenfalls sind zwei oder mehrere Dioden in Reihe zu schalten.

Wenn das Kraftfahrzeug endgültig abgestellt wird, also der Fahrbetrieb beendet ist, wird die Brennkraftmaschine und damit der Generator G abgeschaltet und das erste Schaltelement 8 geschlossen und das zweite Schaltelement 10 geöffnet, so dass der erste Energiespeicher 2 die Ruhestromversorgung der Bordnetzverbraucher 7 übernimmt. Vor einem späteren Kaltstart der Brennkraftmaschine durch den Starter S wird das erste Schaltelement 8 wieder geöffnet und das zweite Schaltelement 10 geschlossen. Der zweite Energiespeicher 3 übernimmt dann wieder die Versorgung der Bordnetzverbraucher 7 und der erste Energiespeicher 2 bestromt den Starter S, wobei Spannungseinbrüche des ersten Energiespeichers 2 keine Auswirkungen auf die Bordnetzverbraucher 7 haben.

In Fig. 2 ist eine alternative Ausführungsform des Kraftfahrzeugbordnetzes 1 dargestellt, wobei die gleichen Elemente mit gleichen Bezugszeichen wie in Fig. 1 versehen sind. Dabei ist die Ladespannung U_{L1} des ersten Energiespeichers 2 kleiner als die Ladespannung U_{L2} des zweiten Energiespeichers 3. Entsprechend ist der Tiefsetzsteller 11 parallel zum ersten Schaltelement 8 angeordnet. Somit kann während des Betriebes der erste Energiespeicher 2 bedarfsweise über den Tiefsetzsteller 11 geladen werden. Ansonsten kann hinsichtlich der Betriebsweise auf die Ausführungen zu Fig. 1 Bezug genommen werden.

## Patentansprüche

1. Kraftfahrzeugbordnetz (1), umfassend einen Starter (S), einen Generator (G), mindestens einen Bordnetzverbraucher (7), einen ersten elektrischen Energiespeicher (2) und einen zweiten elektrischen Energiespeicher (3), wobei der erste elektrische Energiespeicher (2) dem Starter (S) zugeordnet ist, wobei die beiden elektrischen Energiespeicher (2, 3) unterschiedliche Ladespannungen (U_{L1}, U_{L2}) aufweisen,
**dadurch gekennzeichnet, dass**
der erste Energiespeicher (2) und der Starter (3) parallel geschaltet sind und der Generator (G) und der mindestens eine Bordnetzverbraucher (7) parallel geschaltet sind, wobei zwischen der Parallelschaltung von dem ersten Energiespeicher (2) und dem Starter (S) und der Parallelschaltung zwischen dem Generator (G) und dem mindestens einen Bordnetzverbraucher (7) ein erstes Schaltelement (8) angeordnet ist, wobei zwischen dem zweiten Energiespeicher und der Parallelschaltung vom Generator (G) und dem mindestens einen Bordnetzverbraucher ein zweites Schaltelement (10) angeordnet ist, wobei parallel zu dem Schaltelement (8, 10) des Energiespeichers (2, 3) mit der niedrigeren Ladespannung (U_{L1}, U_{L2}) ein Tiefsetzsteller (11) angeordnet ist.

2. Kraftfahrzeugbordnetz nach Anspruch 1, **dadurch gekennzeichnet, dass** parallel zum ersten Schaltelement (8) eine Diode (9) angeordnet ist.

3. Kraftfahrzeugbordnetz nach Anspruch 1 oder 2, **dadurch gekennzeichnet, dass** der erste Energiespeicher (2) eine höhere Ladespannung (U_{L1}) und niedrigere Ruhespannung (U₀₁) als der zweite Energiespeicher (3) aufweist.

4. Kraftfahrzeugbordnetz nach einem der vorangegangenen Ansprüche, **dadurch gekennzeichnet, dass** der erste Energiespeicher (2) eine höhere Ladekapazität als der zweite Energiespeicher (3) aufweist.

5. Kraftfahrzeugbordnetz nach einem der vorangegangenen Ansprüche, **dadurch gekennzeichnet, dass** der Innenwiderstand des ersten Energiespeichers (2) derart gewählt ist, dass dieser ausreichend Strom zur Gewährleistung der Kaltstartfähigkeit des Starters (S) zur Verfügung stellen kann.

6. Kraftfahrzeugbordnetz nach einem der vorangegangenen Ansprüche, **dadurch gekennzeichnet, dass** das Kraftfahrzeugbordnetz (1) mit einer Start-Stopp-Automatik einer Brennkraftmaschine ausgebildet ist.

7. Verfahren zum Betreiben eines Kraftfahrzeugbordnetzes (1) nach Anspruch 1, **dadurch gekennzeichnet, dass** während des Betriebes des Kraftfahrzeuges der zweite Energiespeicher (3) mit dem Generator (G) die Spannungsversorgung der Bordnetzverbraucher (7) übernimmt, wozu das zweite Schaltelement (10) geschlossen ist und die Generatorspannung auf die Ladespannung (U_{L2}) des zweiten Energiespeichers (3) eingestellt ist, wobei das erste Schaltelement (8) geöffnet ist.

8. Verfahren nach Anspruch 7, **dadurch gekennzeichnet, dass** der erste Energiespeicher (2) eine höhere Ladespannung (U_{L1}) aufweist, wobei zum Laden des ersten Energiespeichers (2) das zweite Schaltelement (10) geöffnet wird, die Generatorspannung an die Ladespannung des ersten Energiespeichers (2) angepasst und das erste Schaltelement (8) geschlossen wird, wobei über den Tiefsetzsteller (11) parallel der zweite Energiespeicher (3) geladen wird.

9. Verfahren nach Anspruch 7 oder 8, **dadurch gekennzeichnet, dass** im Ruhezustand des Kraftfahrzeugs der erste Energiespeicher (2) die Ruhestromversorgung der Bordnetzverbraucher (7) übernimmt, wozu das erste Schaltelement (8) geschlossen und das zweite Schaltelement (10) geöffnet wird.

10. Verfahren nach einem der Ansprüche 7 bis 9, **dadurch gekennzeichnet, dass** beim Kaltstart des Kraftfahrzeugs das erste Schaltelement (8) geöffnet wird.

11. Verfahren nach einem der Ansprüche 7 bis 10, **dadurch gekennzeichnet, dass** im Fehlerfall eines Energiespeichers (2, 3) der andere Energiespeicher (2, 3) eine Rückfallebene bildet.

## Claims

1. Motor vehicle electrical system (1) comprising a starter (S), a generator (G), at least one electrical system consumer (7), a first electrical energy store (2) and a second electrical energy store (3) wherein the first electrical energy store (2) is assigned to the starter (S), wherein the two electrical energy stores (2, 3) have different charge voltages (U_{L1}, U_{L2}),
**characterized in that**
the first energy store (2) and the starter (3) are connected in parallel, and the generator (G) and the at least one electrical system consumer (7) are connected in parallel, wherein a first switching element (8) is arranged between the parallel connection of the first energy store (2) and the starter (S) and the parallel connection between the generator (G) and the at least one electrical system consumer (7), wherein a second switching element (10) is arranged between the second energy store and the parallel connection of the generator (G) and the at least one electrical system consumer, wherein a buck converter (11) is arranged parallel to the switching element (8, 10) of the energy store (2, 3) with the lower charge voltage (U_{L1}, U_{L2}) .

2. Motor vehicle electrical system according to Claim 1, **characterized in that** a diode (9) is arranged parallel to the first switching element (8).

3. Motor vehicle electrical system according to Claim 1 or 2, **characterized in that** the first energy store (2) has a higher charge voltage (U_{L1}) and a lower open-circuit voltage (U₀₁) than the second energy store (3).

4. Motor vehicle electrical system according to one of the preceding claims, **characterized in that** the first energy store (2) has a higher charging capacity than the second energy store (3).

5. Motor vehicle electrical system according to one of the preceding claims, **characterized in that** the internal resistance of the first energy store (2) is selected such that it can make available sufficient current to ensure the cold starting capability of the starter (S).

6. Motor vehicle electrical system according to one of the preceding claims, **characterized in that** the motor vehicle electrical system (1) is embodied with an automatic start/stop system of an internal combustion engine.

7. Method for operating a motor vehicle electrical system (1) according to Claim 1, **characterized in that**, while the motor vehicle is operating the second energy store (3) with the generator (G) performs the function of supply voltage to the electrical system consumers (7), wherein the second switching element (10) is closed and the generator voltage is set to the charge voltage (U_{L2}) of the second energy store (3), wherein the first switching element (8) is opened.

8. Method according to Claim 7, **characterized in that** the first energy store (2) has a higher charge voltage (U_{L1}), wherein in order to charge the first energy store (2) the second switching element (10) is opened, the generator voltage is adapted to the charge voltage of the first energy store (2), and the first switching element (8) is closed, wherein the second energy store (3) is charged in parallel via the buck converter (11).

9. Method according to Claim 7 or 8, **characterized in that** in the idle state of the motor vehicle the first energy store (2) performs the function of supplying quiescent current to the electrical system consumers (7), wherein the first switching element (8) is closed and the second switching element (10) is opened.

10. Method according to one of Claims 7 to 9, **characterized in that** in the case of cold starting of the motor vehicle the first switching element (8) is opened.

11. Method according to one of Claims 7 to 10, **characterized in that** in the event of a fault in an energy store (2, 3) the other energy store (2, 3) forms a fallback level.

## Revendications

1. Réseau de bord de véhicule automobile (1), comprenant un démarreur (S), un générateur (G), au moins un consommateur de réseau de bord (7), un premier accumulateur d'énergie électrique (2) et un deuxième accumulateur d'énergie électrique (3), le premier accumulateur d'énergie électrique (2) étant associé au démarreur (S), les deux accumulateurs d'énergie électrique (2, 3) présentant différentes tensions de charge (U_{L1}, U_{L2}) ;
**caractérisé en ce que** :
le premier accumulateur d'énergie (2) et le démarreur (3) sont connectés parallèlement et le générateur (G) et l'au moins un consommateur de réseau de bord (7) sont connectées parallèlement, un premier élément de connexion (8) étant disposé entre le circuit parallèle du premier accumulateur d'énergie (2) et du démarreur (S) et le circuit parallèle prévu entre le générateur (G) et l'au moins un consommateur de réseau de bord (7), un deuxième élément de connexion (10) étant disposé entre le deuxième accumulateur d'énergie et le circuit parallèle du générateur (G) et l'au moins un consommateur de réseau de bord, un convertisseur abaisseur (11) étant disposé parallèlement à l'élément de connexion (8, 10) de l'accumulateur d'énergie (2, 3) avec la tension de charge (U_{L1}, U_{L2}) inférieure.

2. Réseau de bord de véhicule automobile selon la revendication 1, **caractérisé en ce qu'**une diode (9) est disposée parallèlement au premier élément de connexion (8).

3. Réseau de bord de véhicule automobile selon la revendication 1 ou 2, **caractérisé en ce que** le premier accumulateur d'énergie (2) présente une tension de charge (U_{L1}) plus élevée et une tension de repos (U_{O1}) plus basse que le deuxième accumulateur d'énergie (3).

4. Réseau de bord de véhicule automobile selon l'une quelconque des revendications précédentes, **caractérisé en ce que** le premier accumulateur d'énergie (2) présente une capacité de charge plus élevée que le deuxième accumulateur d'énergie (3).

5. Réseau de bord de véhicule automobile selon l'une quelconque des revendications précédentes, **caractérisé en ce que** la résistance intérieure du premier accumulateur d'énergie (2) est sélectionnée de telle sorte que celle-ci permet de mettre à disposition un courant suffisant pour garantir la capacité de démarrage à froid du démarreur (S).

6. Réseau de bord de véhicule automobile selon l'une quelconque des revendications précédentes, **caractérisé en ce que** le réseau de bord de véhicule automobile (1) est réalisé avec un système automatique de marche-arrêt d'un moteur à combustion interne.

7. Procédé de fonctionnement d'un réseau de bord de véhicule automobile (1) selon la revendication 1, **caractérisé en ce que** pendant le fonctionnement du véhicule automobile, le deuxième accumulateur d'énergie (3) reprend avec le générateur (G) l'alimentation en tension du consommateur de réseau de bord (7), le deuxième élément de connexion (10) étant alors fermé et la tension de générateur étant réglée sur la tension de charge (U_{L2}) du deuxième accumulateur d'énergie (3), le premier élément de connexion (8) étant ouvert.

8. Procédé selon la revendication 7, **caractérisé en ce que** le premier accumulateur d'énergie (2) présente une tension de charge (U_{L1}) plus élevé, sachant que pour charger le premier accumulateur d'énergie (2), le deuxième élément de connexion (10) est ouvert, la tension de générateur étant ajustée à la tension de charge du premier accumulateur d'énergie (2) et le premier élément de connexion (8) étant fermé, le deuxième accumulateur d'énergie (3) étant chargé en parallèle via le convertisseur abaisseur (11).

9. Procédé selon la revendication 7 ou 8, **caractérisé en ce qu'**à l'état de repos du véhicule automobile, le premier accumulateur d'énergie (2) assume l'alimentation en flux de repos du consommateur de réseau de bord (7), le premier élément de connexion (8) étant alors fermé et le deuxième élément de connexion (10) étant ouvert.

10. Procédé selon l'une quelconque des revendications 7 à 9, **caractérisé en ce qu'**en cas de démarrage à froid du véhicule automobile, le premier élément de connexion (8) est ouvert.

11. Procédé selon l'une quelconque des revendications 7 à 10, **caractérisé en ce qu'**en cas d'anomalie, l'accumulateur d'énergie (2, 3) de l'autre accumulateur d'énergie (2, 3) forme un plan de rechute.
